# EUROPEAN PATENT APPLICATION

(11) **EP 4 425 328 A1**
(43) Date of publication of application: **04.09.2024**
(21) Application number: 23159037.3
(22) Date of filing: 28.02.2023
(51) Int. Cl.: G06F 9/445, G06F 9/448, G06F 9/455

(54) **METHOD OF EXECUTING A JAVA CARD APPLICATION**

(71) Applicant: STMicroelectronics International N.V., 1228 Plan-les-Ouates, Geneva (CH)
(72) Inventor: DI MAGGIO, Luigi, 80018 Mugnano (IT); MIRTO, Ettore, 81020 Casapulla (IT)
(74) Representative: Casalonga

(57) **Abstract**

According to one aspect, it is proposed a method of executing on an integrated circuit a Java card application (APLT) that requires to use a first package (PCK1) and a second package (PCK2) that extend to each other of an application programming interface (API), the method comprising, starting from a class of said first package (PCK1):
- calling and executing (20)a native method (NTVM) implementing a function of a Java card method (JCM) of said class of the first package (PCK1), then
- calling (21) a Java card method (JCM) of a class of the second package (PCK2) from said native method (NTVM), then
- executing (22) said Java card method (JCM) with a Java card virtual Machine (JCVM).

## Description

Implementations and embodiments of the invention relate to integrated circuit that are configured to run Java Card applications.

Java card is a software technology that allows Java-based applications (applets) to be run securely on an integrated circuit. Java Card technology combines a subset of the Java programming language with a runtime environment optimized for secure elements, such as smart cards and other tamper-resistant security chips. Java card technology offers a secure and interoperable execution platform that can store and update multiple applications on a single resource-constrained device.

The integrated circuit can be an embedded universal integrated circuit card (also known as "eUICC"). An embedded universal integrated circuit card is an evolution of the classical universal integrated circuit card ("UICC"). The embedded universal integrated circuit card is a form of programmable SIM card that is embedded directly into a device.

Such integrated circuit includes a Java Card Runtime Environment to be able to run Java application. The Java Card Runtime Environment comprises a Java Card Virtual Machine and Java Card Application Programming Interfaces ("APIs").

A Java Card Application programming interfaces has to be programed according to Java card rules. In particular, Java card rules define that it is not possible to import two Java packages that extend to each other. Such cross import of Java packages leads to a Java linker error.

The specification ETSI 102.241, Version 17.1.0 dated August, 2021 defines an application programming interface ("API") and a Runtime Environment for embedded universal integrated circuit cards.

This specification defines a first package called uicc.access.fileadministration and a second package called uicc.access.bertlvfile,.

The uicc.access.fileadministration package allows applications to administrate file systems of the embedded universal integrated circuit card. The uicc.access.bertlvfile package provides BER TLV files functions ("BER" being the acronym of Basic Encoding Rules, and "TLV" being the acronym of Type-length-value) .

The uicc.access.bertlvfile package defines an AdminBERTLVFileView interface and the uicc.access.fileadministration package defines an AdminFileView interface.

In order to support administrative command on BER TLV files, the uicc.access.bertlvfile package is extended by the AdminFileView interface defined in the uicc.access.fileadministration package.

Besides, the uicc.access.fileadministration package defines a AdminFileViewBuilder class. This AdminFileViewBuilder class includes a method called getTheAdminFileView and another method called getTheUICCAdminFileView. These methods return a reference of an object that implements the AdminBERTLVFileView interface, according to the specification ETSI 102.241, Version 17.1.0.

In this case, the AdminBERTLVFileView interface implements the AdminFileView interface and imports uicc.access.fileadministration package as required. On the other side, the AdminFileViewBuilder class imports the uicc.access.bertlvfile package in order to return a reference of an object implementing the AdminBERTLVFileView interface. Such cross import is not allowed by Java Card. Thus, the compilation of a Java code that require a cross import of packages leads to a Java linker error.

However, a third-party application loaded on the embedded universal integrated circuit card could require managing BER TLV files through an application programming interface.

Thus, it is important to provide a solution that allows using two Java card packages that extend to each other to allow a third-party Java card application to use these packages.

Therefore, there is a need to provide solution for executing a Java card application that requires to use two packages of an application programming interface that extend to each other.

According to one aspect, it is proposed a method of executing on an integrated circuit a Java card application that requires to use a first package and a second package that extend to each other of a Java card application programming interface, the method comprising, starting from a class of said first package:
- calling and executing a native method implementing a function of a Java card method of said class of the first package, then
- calling a Java card method of a class of the second package from said native method, then
- executing said Java card method of said class of the second package with a Java card virtual Machine.

A native method is a method that is not implemented in the Java programming language, but in another language.

The application programming interface is developed in Java card to guarantee a standard access to third party applications, but the methods of the first package is implemented with native methods.

The method allows implementing the first package with native methods and then implementing the second package with the Java card virtual machine.

Implementing the first package with native methods allows overcoming the security restrictions of the Java card virtual machine. Thus, it is possible to implement two Java packages that extend to each other without getting into a Java linking error.

Advantageously, calling said Java card method of said class of the second package comprises pushing on a Java card stack a class token and a method token of this Java card method.

Preferably, the native method is in C programming language.

According to another aspect, it is proposed an integrated circuit, notably an embedded universal integrated circuit card, comprising a processing unit configured to execute a Java card application that requires to use a first package and a second package that extend to each other of a Java card application programming interface, the processing unit being configured to, starting from a class of said first package:
- call and execute a native method implementing a function of a Java card method of said class of the first package,
- call a Java card method of a class of a second package from said native method,
- execute said Java card method of said class of the second package with a Java card virtual Machine.

Advantageously, the native method is configured to call the Java card method of said class of the second package by pushing on a Java card stack a class token and a method token of the Java card method.

Preferably, the native method is in C programming language.

Other advantages and features of the invention will appear in the detailed description of embodiments and implementations, in no way restrictive, and the attached drawings in which:
[Fig 1]

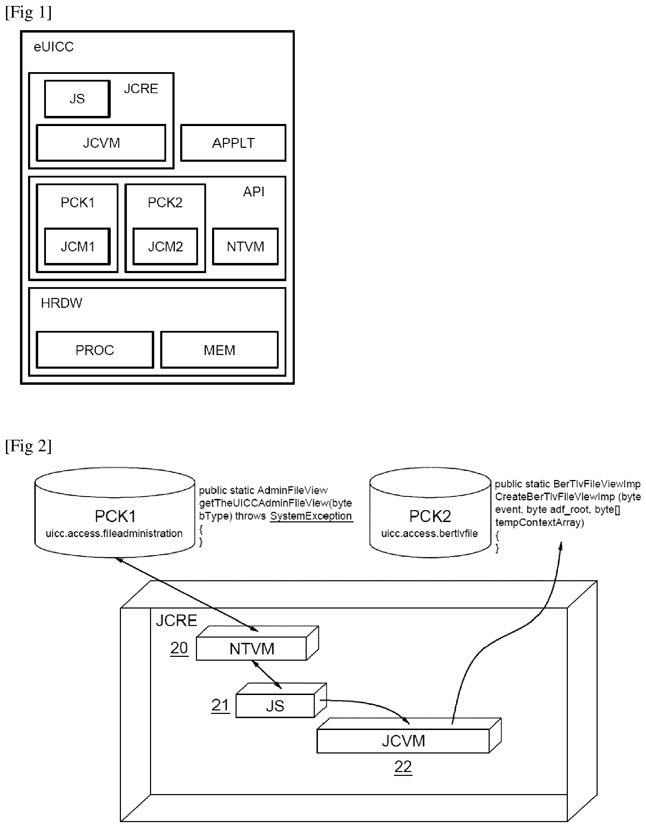

[Fig 2] schematically illustrate various implementations and embodiments of the invention.

Figure 1 shows an embedded universal integrated circuit card eUICC. The embedded universal integrated circuit card eUICC comprises a hardware HRDW. The hardware HRDW includes a memory MEM and a processing unit PROC for example.

The processing unit PROC of the embedded universal integrated circuit card eUICC is configured to run a Java Card Runtime Environment JCRE. The Java Card Runtime Environment JCRE is a software layer that runs on top of a computer's operating system software and provides the class libraries and other resources that a specific Java program needs to run.

The Java Card Runtime Environment JCRE includes a Java stack JS and a Java Card Virtual Machine JCVM. The Java Card Virtual Machine JCVM is an engine that loads Java class files and executes them with a particular set of semantics.

The Java Card Runtime Environment JCRE is configured to load Java packages. A Java package can contain Java classes and interfaces. The package can also contain enumerations, and annotation types. A Java class is a fundamental building block in Java Card. A class describes the data and behavior associated with instances of that class.

The embedded universal integrated circuit card also comprises an application programming interface API. The application programming interface API comprises Java packages and native methods. The application programming interface API comprises a first package PCK1 and a second package PCK2 that extend to each other.

The embedded universal integrated circuit card also comprises a Java card application ("applet") APPLT of a third-party. This application APPLT uses said first package PCK1 and said second package PCK2 of the application programming interface API.

For example, a first package PCK1 can be a package called uicc.access.fileadministration and the second package PCK2 can be a package called uicc.access.bertlvfile, as defined in the specification ETSI 102.241, Version 17.1.0 dated August, 2021. In particular, the uicc.access.fileadministration package allows applications to administrate file systems of the embedded universal integrated circuit card. The uicc.access.bertlvfile package provides BER TLV files functions.

The uicc.access.bertlvfile package defines an AdminBERTLVFileView interface and the uicc.access.fileadministration package defines an AdminFileView interface. In order to support administrative command on BER TLV files, the uicc.access.bertlvfile package is extended by the AdminFileView interface defined in the uicc.access.fileadministration package.

Besides, the uicc.access.fileadministration package defines a AdminFileViewBuilder class. This AdminFileViewBuilder class includes a method called getTheAdminFileView and another method called getTheUICCAdminFileView. These methods return a reference of an object that implements the AdminBERTLVFileView interface, according to the specification ETSI 102.241, Version 17.1.0.

In this case, the AdminBERTLVFileView interface implements the AdminFileView interface and imports uicc.access.fileadministration package as required. On the other side, the AdminFileViewBuilder class imports the uicc.access.bertlvfile package in order to return a reference of an object implementing the AdminBERTLVFileView interface.

To implement these two packages PCK1, PCK2 without getting into a Java Card linker error, the processing unit is configured to implement a Java method JCM1 of the first package PCK1 with a native method NTVM in C code and to implement the second package PCK2 with the Java Card Virtual Machine JCVM.

In particular, the processing unit PROC is configured to call a native method NTVM from a class of the first package PCK1. The native method NTVM is configured to be used to implement a function of a Java card method JCM1 of said class of the first package based on a C code.

For example, a native method NTVM can be defined for the getTheUICCAdminFileView method of the AdminBERTLVFileView interface in the AdminFileViewBuilder class of the uicc.access.fileadministration package.

Then, the processing unit PROC is configured to call a Java card method JCM2 of the second package from the native context. For example, the Java card method JCM2 can be a CreateBerTlvFileViewImp method of the class BerTlvFileViewImp.

In particular, the processing unit PROC is configured to push on a Java stack JS a class token and a method token of the method JCM2 to be called that belong to a class of the second package PCK2. Then, the processing unit PROC is configured to run the Java Card Virtual Machine with the method JCM2 pushed on the Java stack JS. This allows the processing unit PROC to execute the called method JCM2 of the second package PCK2.

Figure 2 shows a method of executing a Java card application APPLT that requires to use two packages PCK1, PCK2 of an application programming interface API that extend to each other.

Starting from a class of a first package, the method comprises a step 20 in which a native method is called and executed from this class of the first package PCK1.

Then, the method comprises a step 21 in which a Java card method JCM2 of the second package is called from the native context. In particular, the processing unit PROC is configured to push on a Java stack JS a class token and a method token of the called method JCM2 that belong to a class of the second package PCK2.

Then, the method comprises a step 22 in which the processing unit PROC runs the Java Card Virtual Machine JCVM with a method JCM2 pushed on the Java stack JS.

## Claims

1. Method of executing on an integrated circuit a Java card application (APLT) that requires to use a first package (PCK1) and a second package (PCK2) that extend to each other of a Java card application programming interface (API), the method comprising, starting from a class of said first package (PCK1):
- calling and executing (20) a native method (NTVM) implementing a function of a Java card method (JCM1) of said class of the first package (PCK1), then
- calling (21) a Java card method (JCM2) of a class of the second package (PCK2) from said native method (NTVM), then
- executing (22) said Java card method (JCM2) of said class of the second package with a Java card virtual Machine (JCVM).

2. Method according to claim 1, in which calling said Java card method (JCM2) of said class of the second package (PCK2) comprises pushing on a Java card stack (JCS) a class token and a method token of this Java card method (JCM2).

3. Method according to claim 1 or 2 in which, the native method (NTVM) is in C programming language.

4. Integrated circuit comprising a processing unit (PROC) configured to execute a Java card application (APLT) that requires to use a first package (PCK1) and a second package (PCK2) that extend to each other of a Java card application programming interface (API), the processing unit (PROC) being configured to, starting from a class of said first package (PCK1):
- call and execute a native method (NTVM) implementing a function of a Java card method (JCM1) of said class of the first package (PCK1),
- call a Java card method (JCM2) of a class of a second package (PCK2) from said native method (NTVM),
- execute said Java card method (JCM2) of said class of said second package with a Java card virtual Machine (JCVM).

5. Integrated circuit according to claim 4, in which the native method (NTVM) is configured to call the Java card method (JCM2) of said class of the second package (PCK2) by pushing on a Java card stack a class token and a method token of this Java card method (JCM2).

6. Integrated circuit according to claim 4 or 5 in which, the native method (NTVM) is in C programming language.
